# EUROPÄISCHE PATENTANMELDUNG

(11) **EP 3 340 441 A1**
(43) Veröffentlichungstag der Anmeldung: **27.06.2018**
(21) Anmeldenummer: 16206603.9
(22) Anmeldetag: 23.12.2016
(51) Int. Cl.: H02K 5/124, H02K 5/15, H02K 9/08

(54) **ELEKTRISCHE ROTATIONSMASCHINE**

(71) Anmelder: Siemens Aktiengesellschaft, 80333 München (DE)
(72) Erfinder: Kowalski, Carina, 45478 Mülheim an der Ruhr (DE); Kowalski, Matthias, 45478 Mülheim an der Ruhr (DE); Sievert, Roland, 47199 Duisburg (DE)

(57) **Zusammenfassung**

Die Erfindung betrifft eine elektrische Rotationsmaschine (1) mit einem gasdichten Gehäuse (6), das einen Innenraum (9) der elektrischen Rotationsmaschine (1) von einem Außenbereich (5) abgrenzt, mit einer Welle (2), die sich durch mindestens eine Wellenöffnung (17) vom dem Außenbereich (5) in den Innenraum (9) erstreckt, und mit einer Zwischenkammer (7), die von dem Gehäuse (6) und von der Welle (2) sowie von dem Außenbereich (5) abgrenzt ist, und die mit einer Fördereinrichtung (15) zumindest zum Fördern eines Mediums aus der Zwischenkammer (7) heraus und/oder hinein verbindbar ist.

## Beschreibung

Die Erfindung betrifft eine elektrische Rotationsmaschine.

In der elektrischen Energieversorgung besteht weltweit der Trend, zunehmend auf erneuerbare Energien zu setzen. Da die Wirtschaftlichkeit von Erzeugungsanlagen im Bereich erneuerbarer Energien aber stark von deren Standort abhängt, wie z.B. bei Offshore-Windkraftanlagen, ergibt sich zunehmend das Problem, dass elektrische Energie über große Distanzen transportiert werden muss. Für den Transport der elektrischen Energie im Hoch- und Höchstspannungsnetz wird jedoch Blindleistung benötigt, um die Stabilität des Versorgungsnetzes zu gewährleisten. Generatoren in konventionellen (thermischen) Kraftwerken sind in der Lage, diese Blindleistung als Nebenprodukt zur Verfügung zu stellen. Durch den Abbau konventioneller Kraftwerkskapazitäten entstehen jedoch Engpässe in der Blindleistungserzeugung.

Eine Möglichkeit, dem entgegen zu wirken, sind leistungselektronische Einrichtungen, welche über Kondensatorbänke die entsprechende Blindleistung zur Verfügung stellen. Diese sind jedoch durch fehlende rotierende Massen nur bedingt der Netzstabilität zuträglich und können zudem nur kapazitive Blindleistungen zur Verfügung stellen.

Phasenschieber sind hingegen eine Möglichkeit, kapazitive wie auch induktive Blindleistung zur Verfügung zu stellen und zusätzlich durch rotierende Massen die Frequenz im Versorgungsnetz zu stützen. Da ein Phasenschieber üblicherweise keine Wirkleistung einspeist, lassen sich keine Einnahmen mit dieser Maschine erzielen. Im Gegensatz zu normalen Kraftwerken wird sogar Wirkleistung aus dem Versorgungsnetz entnommen, d.h. motorische Antriebsleistung, die bezahlt werden muss. Der Leistungsbedarf eines Phasenschiebers trägt damit unmittelbar zu den Betriebskosten und der Wirtschaftlichkeit bei und wird daher in der Wirkungsgradbewertung höher bewertet als bei konventionellen Kraftwerksgeneratoren. Um die wirtschaftliche Attraktivität eines Phasenschiebers zu steigern, bleibt also nur die Betriebskosten, bestehend aus Wartungskosten und Verlustleistung, zu minimieren.

Es ist daher Aufgabe der Erfindung, Wege aufzuzeigen, wie der Betrieb von elektrischen Rotationsmaschinen als Phasenschieber energieeffizienter gestaltet werden kann.

Erfindungsgemäß weist eine elektrische Rotationsmaschine ein gasdichtes Gehäuse auf, das einen Innenraum der elektrischen Rotationsmaschine von einem Außenbereich abgrenzt, eine Welle, die sich durch mindestens eine Wellenöffnung vom dem Außenbereich in den Innenraum erstreckt, und eine Zwischenkammer, die von dem Gehäuse und von der Welle sowie von dem Außenbereich abgrenzt ist und die mit einer Fördereinrichtung zum Fördern zumindest eines Mediums aus der Zwischenkammer heraus und/oder hinein verbindbar ist.

Durch das Anschließen einer Fördereinrichtung wird es möglich, den Gasdruck im Gehäuse zu reduzieren und so die Gasreibungsverluste der elektrischen Rotationsmaschine zu minimieren. Im Betrieb wird von einer angeschlossenen Fördereinrichtung in der Zwischenkammer ein geringerer Druck als in dem Außenbereich und im Inneren der elektrischen Rotationsmaschine erzeugt. So wird sichergestellt, dass kein Medium, insbesondere ein gasförmiges Medium, wie z.B. Luft bzw. kein Gas, aus der Atmosphäre eindringen kann. Somit können auch keine Verunreinigungen oder Nässe in die elektrische Rotationsmaschine eintreten und elektrische Kurzschlüsse verursachen, auch wenn das Gehäuse mit einem reduzierten Druck beaufschlagt ist. Mit anderen Worten, die Zwischenkammer ersetzt den bisher üblichen Betrieb der elektrischen Rotationsmaschine mit einem erhöhten Gasdruck, der oberhalb des Umgebungsdruckes liegt, um ein Eindringen von Verunreinigungen zu verhindern, aber zu erhöhten Gasreibungsverlusten führt.

Gemäß einer Ausführungsform ist die Zwischenkammer innerhalb des Gehäuses angeordnet. So muss kein zusätzlicher Bauraum für die Zwischenkammer bereitgehalten werden und die elektrische Rotationmaschine kann besonders kompakt ausgebildet sein.

Gemäß einer weiteren Ausführungsform ist eine Wellendichtung zwischen der Zwischenkammer und dem Außenbereich angeordnet. Somit dichtet die Wellendichtung die Wellenöffnung ab, durch die sich die Welle erstreckt. Die Wellendichtung verringert somit die eintertende Gasmenge sowie ein Eintreten von Verunreinigungen vom Außenbereich in die elektrische Rotationsmaschine durch die Zwischenkammer. Somit bewirkt die Wellendichtung eine Abdichtung der Zwischenkammer gegenüber dem Außenbereich, in dem im Betrieb ein höherer Druck als in der Zwischenkammer herrscht.

Gemäß einer weiteren Ausführungsform ist eine weitere Wellendichtung zwischen der Zwischenkammer und dem Innenraum angeordnet. Somit dichtet die weitere Wellendichtung auch die Wellenöffnung ab. Die weitere Wellendichtung verhindert ein Eintreten von Verunreinigungen von der Zwischenkammer in die elektrische Rotationsmaschine, insbesondere im Stillstand. Somit bewirkt die Wellendichtung eine Abdichtung der elektrischen Rotationsmaschine gegenüber der Zwischenkammer, in dem im Betrieb ein höherer Druck als in der Zwischenkammer herrscht. Günstig ist eine Ausführung mit höherer Durchlässigkeit als die der äußeren Dichtung.

Gemäß einer weiteren Ausführungsform ist ein Dichtungshalter zum Halten zumindest einer Wellendichtung vorgesehen ist. So kann eine oder auch zwei Wellendichtung auf besonders einfache Weise befestigt werden.

Gemäß einer weiteren Ausführungsform ist dem Dichtungshalter die Zwischenkammer zugeordnet ist. Z.B. kann die Zwischenkammer durch einen Hohlraum oder eine Ausnehmung in dem Dichtungshalter gebildet sein. So kann die Zwischenkammer auf besonders einfache Weise gebildet werden.

Gemäß einer weiteren Ausführungsform ist die Förderleitung durch eine sich durch den Dichtungshalter erstreckenden Durchgang gebildet. Z. B. kann sich der Durchgang im montierten Zustand des Dichtungshalters in der elektrischen Rotationsmaschine in radialer Richtung von innen nach außen erstrecken und so eine besonders einfache Realisierung der Förderleitung erlauben.

Gemäß einer weiteren Ausführungsform ist die Fördereinrichtung dazu ausgebildet ein Medium aus der Zwischenkammer heraus und in die Zwischenkammer hinein zu fördern. So kann mit der Fördereinrichtung die elektrische Rotationsmaschine befüllt werden bzw. mit einem Überdruck beaufschlagt werden. So kann die elektrische Rotationsmaschine z.B. im generatorischen Betrieb mehr Leistung abgeben. Dies ist sinnvoll bei elektrischen Rotationsmaschinen, die als Phasenschieber oder Generatoren zur Netzstabilisierung auch über die Möglichkeit verfügen sollen, z.B. durch eine angekuppelte Gasturbine Wirkleistung abzugeben.

Gemäß einer weiteren Ausführungsform ist eine Fördereinrichtung über eine Förderleitung mit der Zwischenkammer verbunden, wobei der Förderleitung ein Filter zugeordnet ist. So kann die Fördereinrichtung vor Verunreinigungen wie Staub oder anderen Partikel geschützt werden.

Ferner gehören zur Erfindung eine elektrische Rotationsmaschine mit einer derartigen Fördereinrichtung sowie eine derartige Fördereinrichtung.

Im Folgenden wird eine bevorzugte Ausführungsform des erfindungsgemäßen Verfahrens anhand der beigefügten schematischen Zeichnungen erläutert. Es zeigt:
Fig. 1 eine schematische Querschnittdarstellung eines Abschnitts einer elektrischen Rotationsmaschine,
Fig. 2 einen Dichtungshalter für die in Figur 1 dargestellte elektrischen Rotationsmaschine.

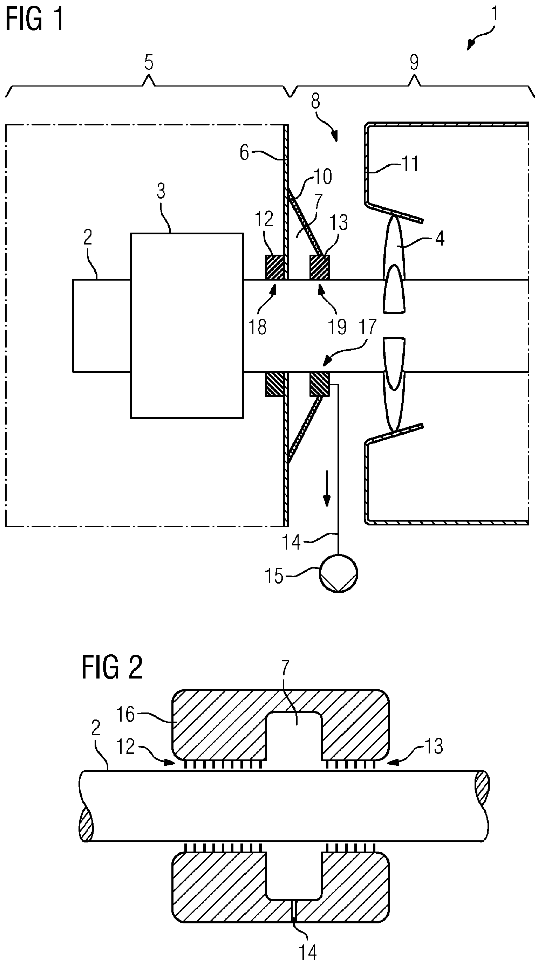

Es wird zunächst auf die Fig. 1 Bezug genommen.

Dargestellt ist eine elektrische Rotationsmaschine 1, die sowohl motorisch als auch generatorisch betrieben werden kann und die auch als Phasenschieber genutzt werden kann.

In der Fig. 1 ist ein stirnseitiger Abschnitt der elektrischen Rotationsmaschine 1 dargestellt.

Die elektrische Rotationsmaschine 1 weist eine Welle 2 auf. Ferner weist die elektrische Rotationsmaschine 1 ein gasdichtes Gehäuse 6 auf, das einen Innenraum 9 gegenüber einem Außenbereich 5 abgrenzt. In dem Gehäuse 6 ist der Rotor sowie der Stator (nicht dargestellt) der elektrischen Rotationsmaschine 1 aufgenommen. Des Weiteren ist im vorliegenden Ausführungsbeispiel ein Abschnitt der Welle 2 in dem Gehäuse 6 aufgenommen. Ferner ist im vorliegenden Ausführungsbeispiel ein Gebläse 4 im Bereich des Innenraums 9 an der Welle 2 befestigt.

Die Welle 2 erstreckt sich durch eine Wellenöffnung 17 aus dem Innenraum 9 des Gehäuses 6 in den Außenbereich 5. In dem Außenbereich 5 ist im Ausführungsbeispiel ein Lager 3 zur Abstützung der Welle 2 vorgesehen.

Durch eine Ansaugkammerwand 11 im Innenraum 9 ist im vorliegenden Ausführungsbeispiel zwischen der Ansaugkammerwand 11 und einem Abschnitt des Gehäuses 6 eine Ansaugkammer 8 gebildet.

Im vorliegenden Ausführungsbeispiel ist in der Ansaugkammer 8 eine Zwischenkammer 7 gebildet. Die Zwischenkammer 7 ist im vorliegenden Ausführungsbeispiel durch einen Abschnitt des Gehäuses 6 und einer Zwischenkammerwand 10 gebildet.

Wie anhand der Fig. 1 zu erkennen ist, ist die Ansaugkammer 8 in Erstreckungsrichtung der Welle 2 zwischen dem Lager 3 und dem Gebläse 4 angeordnet. Ferner ist anhand der Fig. 1 zu erkennen, dass die Zwischenkammer 7 in Erstreckungsrichtung der Welle 2 zwischen dem Lager 3 und der Ansaugkammer 8 angeordnet ist. Somit erstreckt sich die Welle 2 im Bereich der Wellenöffnung 17 sowohl durch die Ansaugkammer 8 und auch durch die Zwischenkammer 7, die im vorliegenden Ausführungsbeispiel unmittelbar aneinander grenzen.

Ferner Weist die Wellenöffnung 17 zwei Teilöffnungen 18, 19 auf, eine erste Teilöffnung 18 in dem Gehäuse 6 und eine zweite Teilöffnung 19 in der Zwischenkammerwand 10.

Zur Abdichtung der Zwischenkammer 7 gegenüber dem Außenbereich 5 ist eine erste Wellendichtung 12 vorgesehen, die im vorliegenden Ausführungsbeispiel als Gasdichtung ausgebildet ist.

Ferner ist zur Abdichtung der Zwischenkammer 7 gegenüber dem Innenraum 9 eine zweite Wellendichtung 13 vorgesehen, die im vorliegenden Ausführungsbeispiel ebenfalls als Gasdichtung ausgebildet ist.

Eine Förderleitung 14 verbindet die Zwischenkammer 7 mit einer Fördereinrichtung 15. Die Förderleitung 14 wie auch die Fördereinrichtung 15 sind im vorliegenden Ausführungsbeispiel jeweils dazu ausgebildet als Medium ein Gas oder Luft zu fördern. Hierzu kann die Fördereinrichtung 15 eine Pumpe aufweisen, die von einem Motor angetrieben wird. Dabei ist im vorliegenden Ausführungsbeispiel die Fördereinrichtung 15 bidirektional betreibbar ausgebildet, d.h. durch den Betrieb der Fördereinrichtung 15 kann Gas oder Luft aus der Zwischenkammer 15 heraus und/oder auch hineingefördert werden. Abweichend vom vorliegenden Ausführungsbeispiel kann die Fördereinrichtung auch nur unidirektional betreibbar ausgebildet sein, um im Betrieb Gas oder Luft aus der Zwischenkammer 15 heraus zu fördern.

Des Weiteren ist der Förderleitung 14 ein Filter (nicht dargestellt) zugeordnet, mit dem Verunreinigungen wie Staub oder anderen Partikel zurückgehalten werden können, sodass diese - je nach Strömungsrichtung in der Förderleitung 14 - nicht in die Zwischenkammer 7 oder in die Fördereinrichtung 15 gelangen.

Es wird nun zusätzlich auf Fig. 2 Bezug genommen.

Dargestellt ist ein Dichtungshalter 16, der zum Halten sowohl der der ersten Wellendichtung 12 als auch der zweiten Wellendichtung 13 ausgebildet ist. Die Zwischenkammer 7 ist im vorliegenden Ausführungsbeispiel durch eine Ausnehmung oder einen Hohlraum in dem Dichtungshalter 16 gebildet, während der Förderleitung 14 durch einen Durchgang, wie z.B. eine Bohrung, gebildet ist, die sich in radialer Richtung von der Zwischenkammer 7 bis zur Außenseite des Dichtungshalters 16 erstreckt.

Im Unterdruckbetrieb saugt die Fördereinrichtung 15 über die Förderleitung 14 Luft oder Gas aus der Zwischenkammer 7 und erzeugt so einen Druck in der Zwischenkammer 7, der unterhalb des jeweiligen Drucks im Außenbereich 5 und im Innenraum 9 ist. So wird sichergestellt, dass keine Luft oder Gas aus der Atmosphäre und damit keine Verunreinigungen, wie z.B. Staub oder anderen Partikel, in die Ansaugkammer 8 eintreten können. Aufgrund des herrschenden Druckgefälles kann Luft oder Gas aus dem Außenbereich 5, d.h. der Umgebung, und der Ansaugkammer 8 in den Zwischenraum 7 eintreten und wird dann durch die Fördereinrichtung 15 abgesaugt.

Ferner kann im Betrieb die Förderrate der Fördereinrichtung 15 verändert werden, z.B. durch Ändern der Drehzahl der Pumpe, um einen Gasdruck in der elektrischen Rotationsmaschine zu steuern oder zu regeln. Von Vorteil ist hierbei, dass die Fördereinrichtung 15 im Unterdruckbetrieb ohnehin einen Unterdruck in der Zwischenkammer 7 erzeugt. Durch den Serienwiderstand der Wellendichtung 13 zwischen dem Gehäuse 6 und der Zwischenkammer 7 bewirkt die resultierende Druckdifferenz, dass der Druck in der elektrischen Rotationsmaschine 1 stets höher als in der Zwischenkammer 7 ist (im Unterdruckbetrieb).

Des Weiteren kann vorgesehen sein, durch Richtungsumkehr die Förderrichtung umzukehren, um so Luft oder Gas in die Zwischenkammer 7 und dann durch die Ansaugkammer 8 in die elektrische Rotationsmaschine 1 zu fördern. So kann die elektrische Rotationsmaschine 1 mehr Leistung abgeben, wenn sie generatorisch betrieben wird. Dabei ist der Druck in der Kammer 7 höher als in dem Außenbereich, wodurch ebenfalls eine Kontamination mit Staub oder Nässe ausgeschlossen ist.

So kann der Betrieb einer elektrischen Rotationsmaschine 1 als Phasenschieber energieeffizienter gestaltet werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Elektrische Rotationsmaschine (1), mit einem gasdichten Gehäuse (6), das einen Innenraum (9) der elektrischen Rotationsmaschine (1) von einem Außenbereich (5) abgrenzt, mit einer Welle (2), die sich durch mindestens eine Wellenöffnung (17) vom dem Außenbereich (5) in den Innenraum (9) erstreckt, und mit einer Zwischenkammer (7), die von dem Gehäuse (6) und von der Welle (2) sowie von dem Außenbereich (5) abgrenzt ist, und die mit einer Fördereinrichtung (15) zumindest zum Fördern eines Mediums aus der Zwischenkammer (7) heraus und/oder hinein verbindbar ist.

2. Elektrische Rotationsmaschine (1) nach Anspruch 1,
wobei die Zwischenkammer (7) innerhalb des Gehäuses (6) angeordnet ist.

3. Elektrische Rotationsmaschine (1) nach Anspruch 1 oder 2,
wobei eine Wellendichtung (12) zwischen der Zwischenkammer (7) und dem Außenbereich (5) angeordnet ist.

4. Elektrische Rotationsmaschine (1) nach Anspruch 1, 2 oder 3,
wobei eine weitere Wellendichtung (13) zwischen der Zwischenkammer (7) und dem Innenraum (9) angeordnet ist.

5. Elektrische Rotationsmaschine (1) nach einem der Ansprüche 1 bis 4,
wobei die Fördereinrichtung (15) dazu ausgebildet ist ein Medium aus der Zwischenkammer (7) heraus und/oder in die Zwischenkammer (7) hinein zu fördern.

6. Elektrische Rotationsmaschine (1) nach einem der Ansprüche 1 bis 5,
wobei ein Dichtungshalter (16) zum Halten zumindest einer Wellendichtung (12, 13) vorgesehen ist.

7. Elektrische Rotationsmaschine (1) nach Anspruch 6,
wobei dem Dichtungshalter (16) die Zwischenkammer (7) zugeordnet ist.

8. Elektrische Rotationsmaschine (1) nach Anspruch 7,
wobei die Förderleitung (14) mindestens durch eine sich durch den Dichtungshalter (16) erstreckenden Durchgang gebildet ist.

9. Elektrische Rotationsmaschine (1) nach einem der Ansprüche 1 bis 8,
wobei eine Fördereinrichtung (15) mit der Zwischenkammer (7) verbunden ist.

10. Fördereinrichtung (15) zum Verbinden mit einer elektrischen Rotationsmaschine (1) nach einem der Ansprüche 1 bis 9.
